# EUROPEAN PATENT SPECIFICATION

(11) **EP 2 139 188 B1**
(45) Date of publication and mention of the grant of the patent: **12.12.2012**
(21) Application number: 08748584.3
(22) Date of filing: 15.05.2008
(51) Int. Cl.: H04L 29/06

(54) **A L2C METHOD, DEVICE AND SYSTEM**
EIN L2C-VERFAHREN, VORRICHTUNG UND SYSTEM
PROCÉDÉ, DISPOSITIF ET SYSTÈME L2C

(30) Priority: 15.05.2007 CN 200710074462
(43) Date of publication of application: 30.12.2009
(73) Proprietor: Huawei Technologies Co., Ltd., Longgang District, Shenzhen Guangdong 518129 (CN)
(72) Inventor: ZHENG, Ruobin, Longgang District 518129 Shenzhen (CN)
(74) Representative: Kreuz, Georg Maria
(86) International application number: PCT/CN2008/070978
(87) International publication number: WO 2008/138275

(56) References cited:
- EP-A1- 1 793 553
- CN-A- 1 643 870
- CN-A- 1 819 562
- CN-A- 1 893 428
- US-A1- 2004 015 591
- OOGHE ALCATEL N VOIGT SIEMENS M PLATNIC ECI T HAAG T-SYSTEMS S: "Framework and Requirements for a Layer 2 Control Protocol (L2CP) in Broadband Multi-Service Networks; draft-ooghe-l2cp-framework-00.txt", IETF STANDARD-WORKING-DRAFT, INTERNET ENGINEERING TASK FORCE, IETF, CH, 1 January 2006 (2006-01-01), XP015044483, ISSN: 0000-0004
- SANJAY WADHWA JUNIPER NETWORKS JEROME MOISAND JUNIPER NETWORKS SWAMI SUBRAMANIAN JUNIPER NETWORKS THOMAS HAAG T-SYSTEMS NORBERT VO: "GSMP extensions for layer2 control (L2C) Topology Discovery and Line Configuration; draft-wadhwa-gsmp-l2control-configuration- 01.txt", IETF STANDARD-WORKING-DRAFT, INTERNET ENGINEERING TASK FORCE, IETF, CH, no. 1, 28 March 2006 (2006-03-28), XP015045053, ISSN: 0000-0004

## Description

### A L2C METHOD, DEVICE AND SYSTEM

### BACKGROUND OF THE INVENTION

### Field of the Technology

The present invention relates to the field of data communications, and more particularly to a layer 2 control (L2C) method, an L2C device, and an L2C system.

### Background of the Invention

In order to enable an access network to support new services, a controlling mechanism is required for controlling a device of the access network. For reducing the load of an operation support device in controlling each device of the access network, a layer 2 control protocol (L2CP) is adopted, which controls a large number of access nodes (ANs) through a broadband remote access server (BRAS). Recently, the L2CP is mainly adapted for topology discovery, circuit configuration, circuit test, and multicast control.

Typically, each broadband network gateway (BNG)/BRAS supports 5000 ANs, each AN supports 30 to 40 Internet service providers (ISPs), and each ISP controls the AN through one L2C connection on the BNG/BRAS, so that each BNG/BRAS supports 5000 AN/BNG x 30 ISP/AN x 1 L2C/ISP = 150000 L2C/BNG L2C connections. Therefore, the traffic of L2C messages in the BNG/BRAS from the access networks is extremely large.

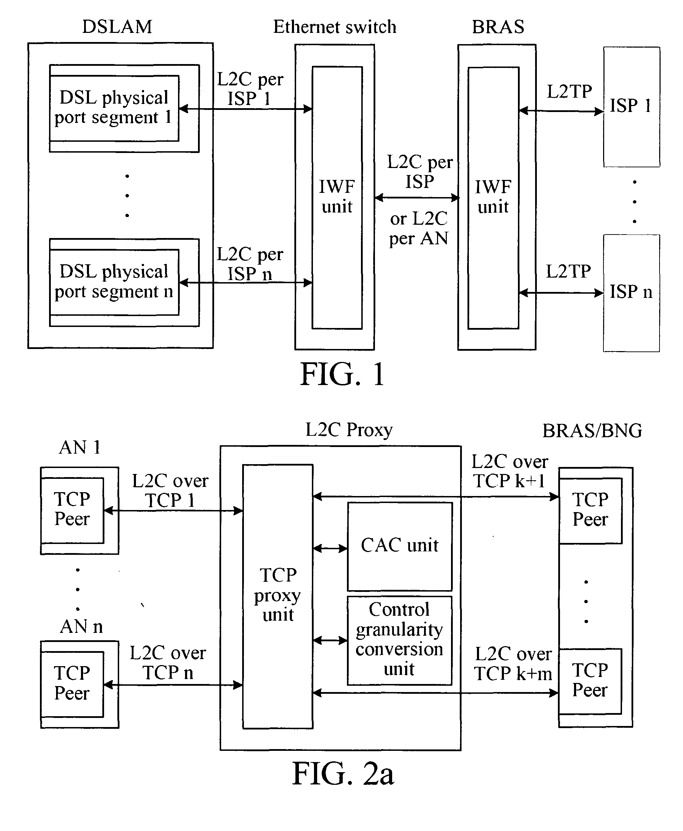

In the conventional art, as shown in FIG. 1, the digital subscriber line (DSL) physical ports of the DSL access multiplexer (DSLAM) are partitioned according to service providers (SPs) (ISPs are taken as an example in FIG. 1). Each ISP directly controls the DSL physical ports of the corresponding DSL physical port partition through the L2CP. IETF Internet-Draft, "GSMP extensions for layer 2 control (L2C) Topology Discovery and line, configuration" describes how L2 control protocol will use TCP for exchanging GSMP protocol messages. In order to reduce the traffic of the L2C messages from the access networks, a L2C proxy, that is, an interworking function (IWF) unit in FIG. 1, is introduced to forward the L2C messages according to the ISP or the AN (such as the DSLAM). The IWF unit is located in the Ethernet switch and the BRAS. In the conventional art, only the L2C proxy architecture is introduced, and how to realize the mechanism for forwarding the L2C messages according to the ISP or the AN still needs to be solved urgently.

### SUMMARY OF THE INVENTION

Accordingly, the present invention is directed to a layer 2 control (L2C) device, an L2C method, and an L2C system, which realize a mechanism for forwarding L2C messages according to an ISP or an AN through transport control protocol (TCP) proxy.

As a first aspect the present invention provides an L2C device, which includes a TCP proxy unit. The TCP proxy unit is adapted to segment TCP connections carrying L2C messages between network devices that are connected to the L2C device, convert one TCP connection from one side into n TCP connections after segmenting, and send the n TCP connections to a network device connected to the L2C device on the other side; or convert m TCP connections from one side into one TCP connection after segmenting, and then send the TCP connection to the network device connected to the L2C device on the other side.

As a second aspect the present invention provides an L2C method, which includes the following steps.

In Step A1, a TCP connection sent from a network device on one side through a TCP connection carrying L2C messages is received.

In Step B1, the TCP connection is converted into n TCP connections, and the converted TCP connections are sent to a network device on the other side.

Alternatively, in Step A2, m TCP connections sent from a network device on one side through a TCP connection carrying L2C messages are received.

In Step B2, the TCP connections are converted into one TCP connection, and the converted TCP connection is sent to a network device on the other side.

As a third aspect the present invention provides an L2C system, which includes an L2C device including a TCP proxy unit. The TCP proxy unit is adapted to segment TCP connections carrying L2C messages between network devices connected to the L2C device, convert one TCP connection from one side into n TCP connections after segmenting, and send the n TCP connections to a network device connected to the L2C device on the other side; or convert m TCP connections from one side into one TCP connection after segmenting, and send the TCP connection to the network device connected to the L2C device on the other side.

As seen from the technical solutions provided by the present invention, by using TCP proxy, TCP connections carrying L2C messages between network devices connected to the TCP proxy are segmented. One TCP connection from one side is converted into a group of (n) TCP connections after segmenting, and the group of (n) TCP connections is sent to a network device connected to the device on the other side. Alternatively, a group of (m) received TCP connections are converted into one TCP connection, and the TCP connection is sent to the network device connected to the device on the other side. Therefore, a mechanism for forwarding L2C messages according to the ISP or the AN is realized, thereby reducing a traffic of the L2C messages in the BNG/BRAS from access networks.

### BRIEF DESCRIPTION OF THE DRAWINGS

FIG. 1 is a schematic view of an L2C proxy system in the conventional art;
FIG. 2a is a functional block diagram 1 of an L2C proxy system terminated at remote ANs according to an embodiment of the present invention;
FIG. 2b is a functional block diagram 1 of an L2C proxy system terminated at local ANs according to an embodiment of the present invention;
FIG. 3 is a functional block diagram 2 of an L2C proxy system according to an embodiment of the present invention;
FIG. 4 is a downlink-direction flow chart 1 of an L2C proxy method according to an embodiment of the present invention;
FIG. 5 is a downlink-direction flow chart 2 of an L2C proxy method according to an embodiment of the present invention;
FIG. 6 is an uplink-direction flow chart 1 of an L2C proxy method according to an embodiment of the present invention;
FIG. 7 is an uplink-direction flow chart 2 of an L2C proxy method according to an embodiment of the present invention;
FIG. 8 is a flow chart 1 of configuring L2C ports according to an embodiment of the present invention (when a failure occurs between an L2C Proxy and a BRAS/BNG); and
FIG. 9 is a flow chart 1 of configuring L2C ports (when a failure occurs between an L2C Proxy and an AN).

### DETAILED DESCRIPTION OF THE EMBODIMENTS

In order to further illustrate the technical solutions of an L2C method, an L2C device, and an L2C system provided in the present invention, specific embodiments are described in the following through accompanying drawings by taking, for example, an L2C Proxy to serve as an L2C device.

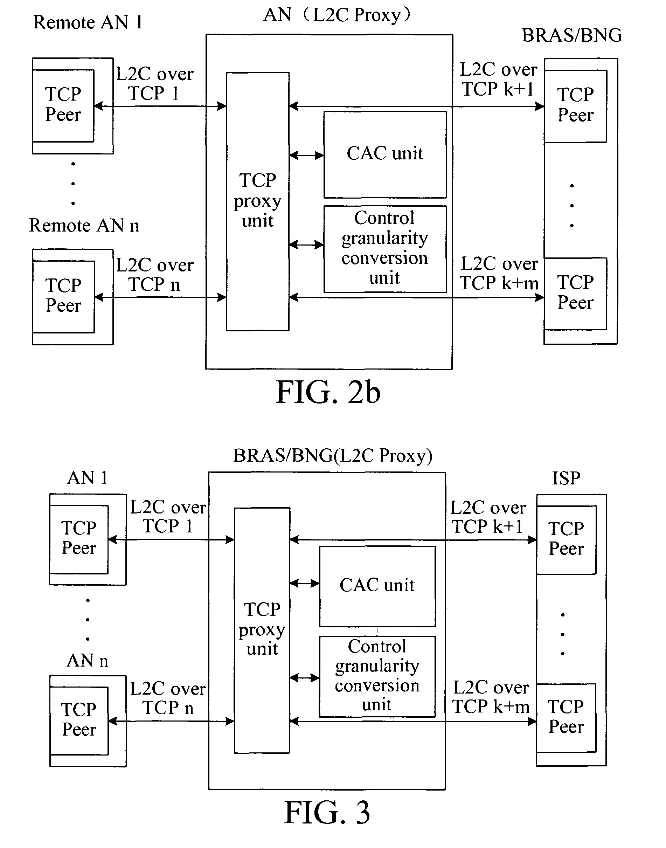

In an embodiment of the present invention, the L2C Proxy includes a TCP proxy unit, and a control granularity conversion unit, and optionally includes a connection admission control (CAC) unit. Referring to FIGs. 2a and 2b, a first network device connected to the L2C device (L2C Proxy) is a remote AN/local AN/aggregation node, and a second network device connected to the L2C device (L2C Proxy) is a BRAS/BNG. The L2C Proxy may be located at the AN/aggregation node, and L2C messages are carried on TCP connections between the first network device and the second network device.

The TCP proxy unit is adapted to convert one received L2C message into a group of L2C messages and send the group of L2C messages, or adapted to convert a group of received L2C messages into one L2C message and send the L2C message. Particularly, TCP connections carrying L2C messages from the remote AN/AN to the BRAS, or from the remote AN/AN to the BNG, or from the remote AN/AN to a service provider (SP) are segmented, and one TCP connection or a group of TCP connections from one side is converted into a group of TCP connections or one TCP connection to the other side after segmenting. If an L2C message is lost, the TCP proxy unit assists the AN/IP edge node (IP-EN) (including the BRAS/BNG) to perform corresponding configuration-freezing process, and optimizes the message processing according to processing results of the control granularity conversion unit and/or the CAC unit.

The control granularity conversion unit is adapted to convert a control granularity of an L2C message. For example, one L2C message taking a whole DSL physical port segment as the control granularity is converted into one L2C message or a group of L2C messages taking DSL physical port as the control granularity; or one L2C message taking a service flow as the control granularity is converted into one L2C message or a group of L2C messages taking DSL physical port as the control granularity.

The CAC unit is adapted to perform admission control on requests about circuit configuration or multicast control of an L2C message according to a status of network resources, and inform the TCP proxy unit to establish a corresponding TCP connection between the AN and the L2C Proxy if the status of the network resources allows.

In another embodiment of the present invention, the L2C Proxy is located at the BRAS/BNG, as shown in FIG. 3. The L2C is terminated at the AN/aggregation node and a network device of the SP (for example, an ISP shown in FIG. 3), and the corresponding TCP peers are respectively located at the AN/aggregation node and the network device of the SP.

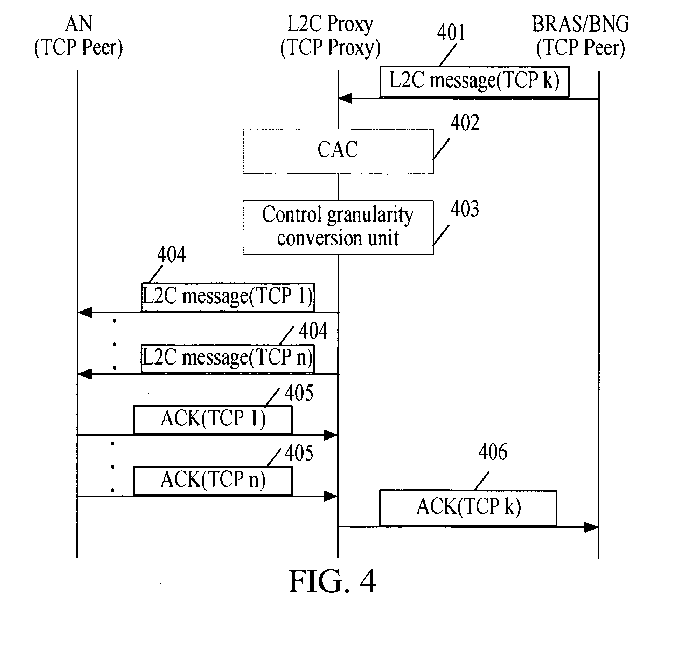

The process of the L2C method based on the L2C system shown in FIGs. 2a, 2b, and 3 is described in the following with reference to FIGs. 4 to 7. The following description takes FIGs. 2a and 2b as an example, but the whole process is also applicable to the scenario shown in FIG. 3.

FIG. 4 is a downlink-direction flow chart 1 of an L2C method, which realizes forwarding L2C messages according to an AN based on the L2C system shown in FIGs. 2a to 2b.

In Step 401, an L2C message is sent to an L2C Proxy through a TCP connection k from a TCP communication peer BRAS/BNG, and the L2C Proxy receives the L2C message through a TCP connection port k.

In Step 402, the L2C Proxy performs a connection admission control (CAC) on requests about circuit configuration or multicast control of the L2C message according to a status of network resources; when the CAC is not passed, the L2C Proxy no longer initiates the L2C; and when the CAC is passed, the following steps are performed.

In Step 403, the L2C Proxy converts a control granularity of the L2C message according to a processing result of the CAC unit.

In Step 404, the L2C Proxy performs a TCP proxy function, converts one TCP connection k into another or a group of TCP connections 1...n, and forwards, through the TCP ports 1...n, the L2C message received through the TCP port k after performing the control granularity conversion.

In Step 405, the TCP communication peer AN receives the L2C message through the TCP connections 1...n, and returns TCP Acknowledgements (ACKs) 1...n.

In Step 406, after the L2C Proxy has received all the TCP ACKs 1...n of the TCP connections 1...n, the L2C Proxy returns a TCP ACK k to the TCP communication peer BRAS/BNG through the TCP connection k.

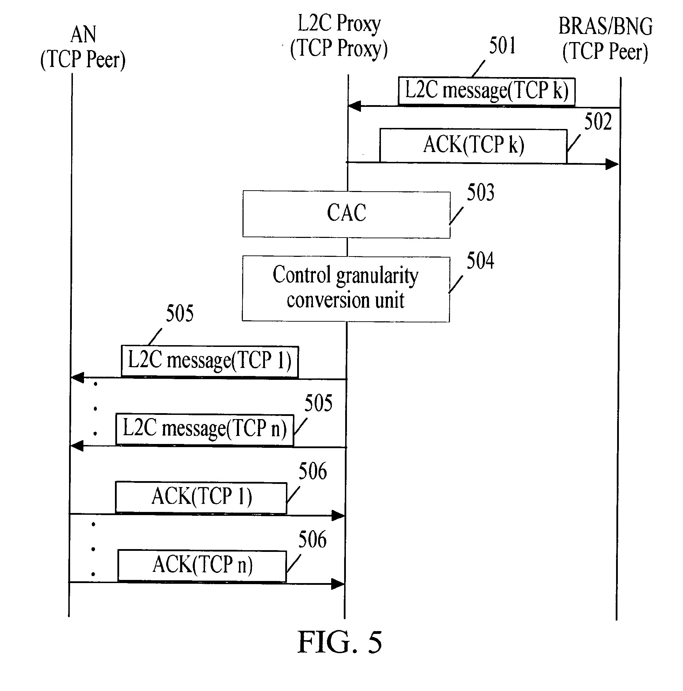

FIG. 5 is a downlink-direction flow chart 2 of an L2C method, which realizes forwarding L2C messages according to an AN based on the L2C system shown in FIG. 3.

Step 501 is the same as Step 401 in FIG. 4.

In Step 502, the L2C Proxy performs a TCP proxy function, and returns a TCP ACK k to the TCP communication peer BRAS/BNG through a TCP connection k.

Steps 503 to 504 are the same as Steps 402 to 403 in FIG. 4.

Steps 505 to 506 are the same as Steps 404 to 405 in FIG. 4.

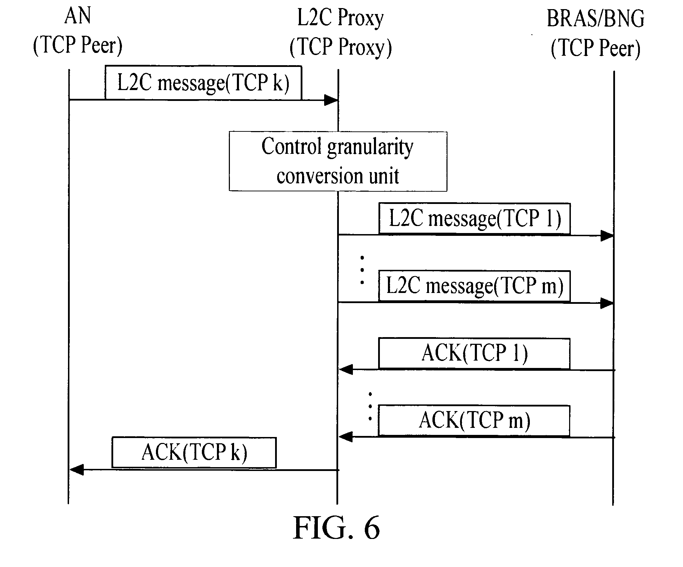

FIG. 6 is an uplink-direction flow chart 1 of an L2C method, which realizes forwarding L2C messages according to an ISP based on the L2C system shown in FIGs. 2a to 2b. The uplink-direction flow chart 1 of FIG. 6 is similar to the downlink-direction flow chart 1 of FIG. 4, and the difference lies in that no CAC process is performed in the uplink direction. Thus the uplink-direction flow chart 1 is not repeated herein. In addition, the number m of L2C connections between the TCP Proxy and the BRAS/BNG in the uplink direction shown in FIG. 6 is not equal to the number n of L2C connections between the TCP Proxy and the AN in the downlink direction shown in FIG. 4, that is, n≠m, and n and m are both positive integers. In practice, the number n of the L2C connections carried between the AN and the TCP Proxy is larger than the number m of the L2C connections carried between the BRAS/BNG and the TCP Proxy, that is to say, generally, n>m.

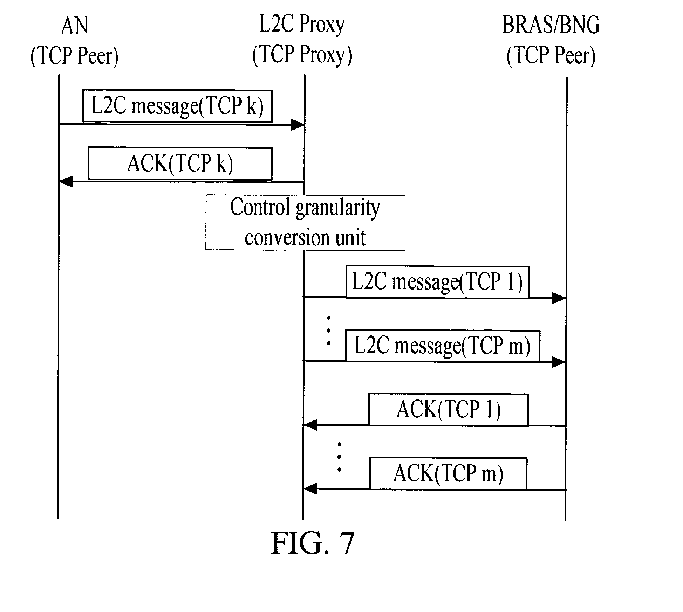

FIG. 7 is an uplink-direction flow chart 2 of an L2C method, which realizes forwarding L2C messages according to an ISP based on the L2C system shown in FIG. 3. The uplink-direction flow chart 2 of FIG. 7 is similar to the downlink-direction flow chart 2 of FIG. 5, and the difference lies in that no CAC process is performed in the uplink direction. Thus the uplink-direction flow chart 2 is not repeated herein. In addition, the number m of the L2C connections between the TCP Proxy and the BRAS/BNG in the uplink direction shown in FIG. 7 is not equal to the number n of the L2C connections between the TCP Proxy and the AN in the downlink direction shown in FIG. 5, that is, n≠m, and n and m are both positive integers. In practice, the number n of the L2C connections carried between the AN and the TCP Proxy is larger than the number m of the L2C connections carried between the BRAS/BNG and the TCP Proxy, that is to say, generally, n>m.

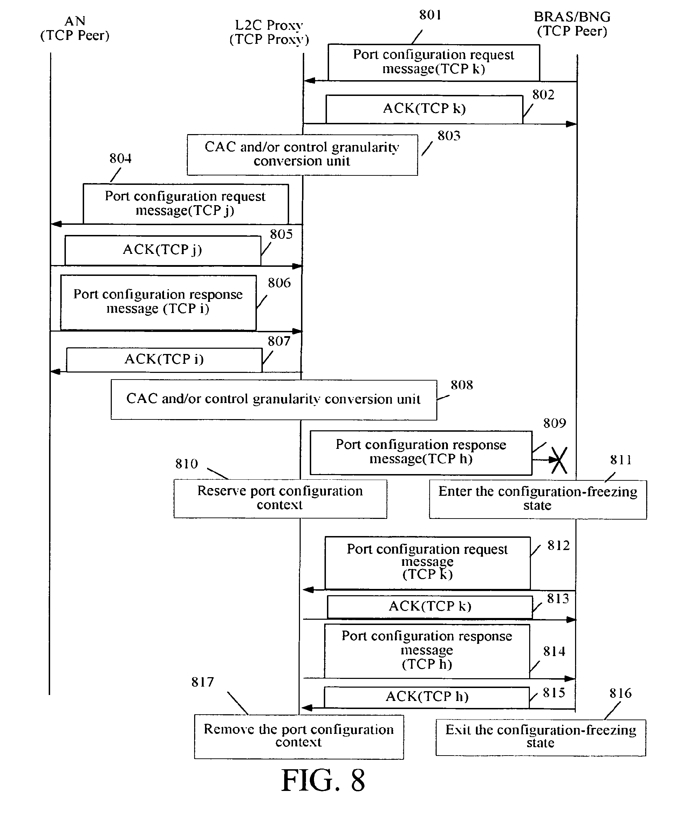

In order to further illustrate the technical solution according to the embodiment of the present invention, referring to FIG. 8, the process of an L2C method is further described in detail, by taking L2C port configuration as an example, in a scenario where a failure occurs between an L2C Proxy and a BRAS/BNG.

In Step 801, an L2C port configuration request message (with a control granularity in a unit of DSL physical port segment) is sent by a TCP communication peer BRAS/BNG to an L2C Proxy through a TCP connection k, and the L2C Proxy receives the message through a TCP connection port k.

In Step 802, the L2C Proxy performs a TCP proxy function, and returns a TCP ACK k to the TCP communication peer BRAS/BNG through the TCP connection k.

In Step 803, the L2C Proxy performs a CAC on the L2C port configuration request according to a status of network resources. When the CAC is not passed, the L2C Proxy no longer initiates the L2C; and when the CAC is passed, the following steps are performed, and the L2C port configuration request message with the control granularity in a unit of DSL physical port segment is converted into an L2C port configuration request message with a control granularity as DSL physical port.

Alternatively, the L2C Proxy does not perform the CAC on the L2C port configuration request. Instead, the L2C Proxy directly converts the L2C port configuration request message with the control granularity in a unit of DSL physical port segment into an L2C port configuration request message with a control granularity as DSL physical port.

In Step 804, the L2C Proxy performs the TCP proxy function, converts one TCP connection k into another TCP connection j, and forwards, through a TCP port j, the L2C port configuration request message received through the TCP port k after performing the control granularity conversion.

In Step 805, a TCP communication peer AN receives the L2C message through the TCP connection j, and returns a TCP ACK j.

In Step 806, after the AN port configuration is completed, the AN returns an L2C port configuration response message (with a control granularity in a unit of DSL physical port) through a TCP connection i.

In Step 807, after the L2C Proxy receives the L2C port configuration response message, the L2C Proxy returns a TCP ACK i through the TCP connection i.

In Step 808, the L2C Proxy converts the L2C port configuration response message with the control granularity in a unit of DSL physical port into an L2C port configuration response message with a control granularity as DSL physical port segment.

Alternatively, the L2C Proxy performs the CAC on the L2C port configuration request according to a status of network resources. When the CAC is not passed, the L2C Proxy no longer initiates the L2C; and when the CAC is passed, the L2C port configuration response message with the control granularity in a unit of DSL physical port segment is converted into an L2C port configuration response message with a control granularity as DSL physical port.

In Step 809, the L2C Proxy converts one TCP connection i into another TCP connection h, and forwards the L2C port configuration response message received from the TCP port i after performing the control granularity conversion to the BRAS/BNG through the TCP port h.

The message fails to reach the BRAS/BNG within a specified period of time due to network congestion or other reasons.

In Step 810, if the L2C Proxy does not receive a TCP ACK h of the L2C port configuration response message within the specified period of time, a port configuration context is reserved, that is, a backup is made for the configured port information.

In Step 811, if the BRAS/BNG still does not receive the L2C port configuration response message within the specified period of time through a TCP retransmission mechanism, the BRAS/BNG enters a configuration-freezing state, and maintains the state before initiating the port configuration.

In Step 812, in order to exit the configuration-freezing state, the BRAS/BNG re-initiates an L2C port configuration request message (with a control granularity in a unit of DSL physical port segment), so that the TCP communication peer BRAS/BNG sends the message to the L2C Proxy through a TCP connection k, and the L2C Proxy receives the message through a TCP connection port k.

In Step 813, the L2C Proxy performs the TCP proxy function, and returns a TCP ACK k to the TCP communication peer BRAS/BNG through the TCP connection k.

In Step 814, the L2C Proxy queries the reserved port configuration context, and finds that the L2C port configuration request has been executed, so that the L2C Proxy no longer initiates operations to the AN, but directly returns an L2C port configuration response message to the BRAS/BNG through the TCP connection h.

In Step 815, the BRAS/BNG returns a TCP ACK h to the L2C Proxy through the TCP connection h.

In Step 816, the BRAS/BNG completes the port configuration and exits the configuration-freezing state.

In Step 817, the L2C Proxy receives the TCP ACK h, and removes the port configuration context.

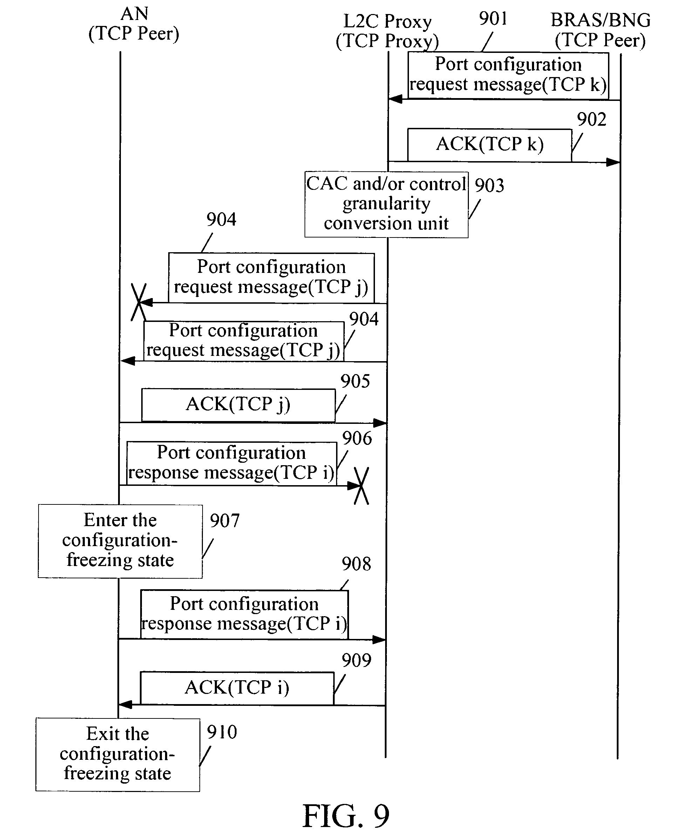

Referring to FIG. 9, the process of an L2C method is further illustrated in the situation that a failure occurs between the L2C Proxy and the AN by taking an L2C port configuration as an example.

Steps 901 to 903 are the same as Steps 801 to 803 in FIG. 8.

In Step 904, the L2C Proxy performs a TCP proxy function, converts one TCP connection k into another TCP connection j, and forwards the L2C port configuration request message received from the TCP port k after performing the control granularity conversion through a TCP port j.

If the message fails to reach the AN within a specified period of time due to network congestion or other reasons, after the specified period of time elapsed, the L2C Proxy re-initiates an L2C port configuration request message to the AN through the TCP connection j.

In Step 905, the TCP communication peer AN receives the L2C message through the TCP connection j, and returns a TCP ACK j.

In Step 906, after the AN port configuration is completed, the AN returns an L2C port configuration response message through a TCP connection i, and the response message fails to reach the L2C Proxy within a specified period of time due to network congestion or other reasons.

In Step 907, if the AN does not receive a TCP ACK i of the L2C port configuration response message within the specified period of time, the AN enters a configuration-freezing state, and maintains the state before port configuration.

In Step 908, in order to exit the configuration-freezing state, after the specified period of time elapsed, the AN once again returns an L2C port configuration response message through the TCP connection i.

In Step 909, the L2C Proxy revives the L2C port configuration response message, and returns the TCP ACK i through the TCP connection i.

In Step 910, the AN completes the port configuration and exits the configuration-freezing state.

As seen from the technical solutions provided in the embodiments, by using the TCP proxy implementation method according to the embodiments of the present invention, one received L2C message is converted into a group of (n) L2C messages and then the group of (n) L2C messages are sent, or a group of (m) received L2C messages are converted into one L2C message and then the L2C message is sent. In this way, a mechanism for forwarding L2C messages according to the ISP or the AN is realized, and the traffic of L2C messages in the BNG/BRAS from access networks is reduced under a practical scenario of n≠m.

Furthermore, the control granularity of the L2C messages can be converted freely, so as to perform operations on the whole DSL physical port segment, thereby reducing the traffic of L2C messages and performing a flexible control on the DSL physical ports according to the service flow requirement.

Meanwhile, by using the CAC mechanism for L2C circuit configuration, the network resources may be coordinated in advance through the L2C Proxy, and when the CAC is not passed, the L2C Proxy does not initiate the L2C circuit configuration, thus avoiding a large waste of the traffic of L2C messages if the circuit configuration fails.

Moreover, in the embodiments of the present invention, the L2C may be terminated at a network device of an SP, and the L2C Proxy may be disposed in the BNG/BRAS. Thus, in a wholesale scenario, the ISPs behind the BNG/BRAS are enabled to directly control the DSL physical port segments of the AN through the L2CP.

The above descriptions are merely preferred embodiments of the present invention, but not intended to limit the present invention.

## Claims

1. A layer 2 control, L2C, device for forwarding L2C messages in access networks, comprising:
a transport control protocol, TCP, proxy unit, adapted to segment TCP connections carrying L2C messages between network devices connected to the L2C device either by, converting one TCP connection received on one side into n TCP connections after segmenting and sending the n TCP connections to a network device connected to the device on the other side; or by converting m TCP connections received on one side into one TCP connection and sending the one TCP connection to the network device connected to the device on the other side.

2. The device according to claim 1, further comprising:
a control granularity conversion unit, connected to the TCP proxy unit, and adapted to perform a conversion on control granularities of L2C messages.

3. The device according to claim 1, further comprising:
a connection admission control, CAC, unit, connected to the TCP proxy unit, and adapted to perform an admission control on requests of the L2C messages for network resources according to a status of network resources.

4. The device according to claim 1, wherein the TCP proxy unit further comprises a storage module, adapted to reserve L2C configuration context when no response message for an L2C port configuration response message sent by the TCP proxy unit is received within a specified period of time;
and adapted to delete the reserved L2C configuration context when the response message for the L2C port configuration response message sent by the TCP proxy unit is received.

5. The device according to claim 3, wherein the L2C messages comprise circuit configuration messages or multicast control messages.

6. The device according to claim 1 or 4, wherein the L2C device is an access node, AN, a broadband remote access server, BRAS, or a broadband network gateway, BNG, or the L2C device is configured as a component on the AN, the BRAS, or the BNG.

7. A layer 2 control, L2C, system, comprising the device according to any one of claims I to 6.

8. A layer 2 control, L2C, method for forwarding L2C messages in access networks, comprising:
Step A1, receiving a TCP connection sent from a network device on one side through a TCP connection carrying L2C messages; and
Step B1, converting the TCP connection into n TCP connections, and sending the converted TCP connections to a network device on the other side; or
Step A2, receiving m TCP connections sent from a network device on one side through a TCP connection carrying L2C messages; and
Step B2, converting the TCP connections into one TCP connection, and sending the converted TCP connection to a network device on the other side.

9. The method according to claim 8, further comprising:
after receiving an L2C message sent from the network device on one side through the TCP connection carrying L2C messages, returning a TCP Acknowledgement, ACK, to the network device through the TCP connection.

10. The method according to claim 8 or 9, further comprising:
after receiving a TCP response message sent from the network device on the other side, forwarding the TCP response message to a peer network device through the TCP connection mentioned in Step A1 or A2.

11. The method according to claim 8, further comprising: converting a control granularity of the L2C message before Step B 1 or B2.

12. The method according to claim 8, further comprising: performing an admission control on a TCP connection request of the L2C message according to a status of network resources before Step B 1 or B2.

13. The method according to claim 8, further comprising:
reserving an L2C configuration context when no response message from the network device on the other side is received within a specified period of time after the L2C message is sent to the network device on the other side through a converted TCP connection;
returning a response message to the network device on the other side when receiving an L2C port configuration request message, and deleting the reserved L2C configuration context.

14. The method according to claim 12, wherein the TCP connection carrying L2C messages between the network devices further comprises:
a TCP connection carrying L2C messages between a remote access node, AN/local AN/aggregation node and a broadband remote access server, BRAS;
a TCP connection carrying L2C messages between a remote AN/local AN/aggregation node and a broadband network gateway, BNG; or
a TCP connection carrying L2C messages between a remote AN/local AN/aggregation node and a remote AN/local AN/aggregation node of a service provider, SP.

## Patentansprüche

1. Schicht-2-Steuervorrichtung, L2C-Vorrichtung, zum Weiterleiten von L2C-Nachrichten in Zugriffsnetzen, die Folgendes umfasst:
eine Transportsteuerprotokoll-Proxy-Einheit, TCP-Proxy-Einheit, die dafür ausgelegt ist, TCP-Verbindungen, die L2C-Nachrichten führen, zwischen Netzvorrichtungen, die mit der L2C-Vorrichtung verbunden sind, entweder durch Umsetzen einer TCP-Verbindung, die auf einer Seite empfangen wird, in n TCP-Verbindungen nach dem Segmentieren und Senden der n TCP-Verbindungen an eine Netzvorrichtung, die mit der Vorrichtung auf der anderen Seite verbunden ist; oder durch Umsetzen von m TCP-Verbindungen, die auf einer Seite empfangen werden, in eine TCP-Verbindung und Senden der einen TCP-Verbindung an die Netzvorrichtung, die mit der Vorrichtung auf der anderen Seite verbunden ist, zu segmentieren.

2. Vorrichtung nach Anspruch 1, die ferner Folgendes umfasst:
eine Steuergranularitäts-Umsetzungseinheit, die mit der TCP-Proxy-Einheit verbunden ist und dafür ausgelegt ist, eine Umsetzung an den Steuergranularitäten von L2C-Nachrichten auszuführen.

3. Vorrichtung nach Anspruch 1, die ferner Folgendes umfasst:
eine Verbindungszulassungssteuer-Einheit, CAC-Einheit, die mit der TCP-Proxy-Einheit verbunden ist und dafür ausgelegt ist, eine Zulassungssteuerung an Anforderungen der L2C-Nachrichten für Netzbetriebsmittel in Übereinstimmung mit einem Zustand von Netzbetriebsmitteln auszuführen.

4. Vorrichtung nach Anspruch 1, wobei die TCP-Proxy-Einheit ferner ein Speichermodul umfasst, das dafür ausgelegt ist, einen L2C-Konfigurationskontext zu reservieren, wenn keine Antwortnachricht auf eine durch die TCP-Proxy-Einheit gesendete L2C-Portkonfigurations-Antwortnachricht innerhalb einer spezifizierten Zeitdauer empfangen wird;
und dafür ausgelegt ist, den reservierten L2C-Konfigurationskontext zu löschen, wenn die Antwortnachricht für die durch die TCP-Proxy-Einheit gesendete L2C-Portkonfigurations-Antwortnachricht empfangen wird.

5. Vorrichtung nach Anspruch 3, wobei die L2C-Nachrichten Leitungskonfigurationsnachrichten oder Multicast-Steuernachrichten umfassen.

6. Vorrichtung nach Anspruch 1 oder 4, wobei die L2C-Vorrichtung ein Zugriffsknoten, AN, ein Breitband-Fernzugriffs-Server, BRAS, oder ein Breitband-Netz-Gateway, BNG, ist oder die L2C-Vorrichtung als eine Komponente in dem AN, dem BRAS oder dem BNG konfiguriert ist.

7. Schicht-2-Steuer-System, L2C-System, das die Vorrichtung nach einem der Ansprüche 1 bis 6 umfasst.

8. Schicht-2-Steuer-Verfahren, L2C-Verfahren, zum Weiterleiten von L2C-Nachrichten in Zugriffsnetzen, das Folgendes umfasst:
Schritt A1, Empfangen einer von einer Netzvorrichtung auf einer Seite durch eine TCP-Verbindung, die L2C-Nachrichten führt, gesendeten TCP-Verbindung; und
Schritt B1, Umsetzen der TCP-Verbindung in n TCP-Verbindungen und Senden der umgesetzten TCP-Verbindungen an eine Netzvorrichtung auf der anderen Seite; oder
Schritt A2, Empfangen von m TCP-Verbindungen, die von einer Netzvorrichtung auf einer Seite durch eine TCP-Verbindung, die L2C-Nachrichten führt, gesendet werden; und
Schritt B2, Umsetzen der TCP-Verbindungen in eine TCP-Verbindung und Senden der umgesetzten TCP-Verbindung an eine Netzvorrichtung auf der anderen Seite.

9. Verfahren nach Anspruch 8, das ferner Folgendes umfasst:
nach dem Empfangen einer von der Netzvorrichtung auf einer Seite durch die TCP-Verbindung, die L2C-Nachrichten führt, gesendeten L2C-Nachricht Zurücksenden einer TCP-Quittung, ACK, durch die TCP-Verbindung an die Netzvorrichtung.

10. Verfahren nach Anspruch 8 oder 9, das ferner Folgendes umfasst:
nach dem Empfangen einer von der Netzvorrichtung auf der anderen Seite gesendeten TCP-Antwortnachricht Weiterleiten der TCP-Antwortnachricht durch die im Schritt A1 oder A2 erwähnte TCP-Verbindung an eine Peer-Netzvorrichtung.

11. Verfahren nach Anspruch 8, das ferner Folgendes umfasst: Umsetzen einer Steuergranularität der L2C-Nachricht vor dem Schritt B1 oder B2.

12. Verfahren nach Anspruch 8, das ferner Folgendes umfasst: Ausführen einer Zulassungssteuerung an einer TCP-Verbindungsanforderung der L2C-Nachricht in Übereinstimmung mit einem Zustand von Netzbetriebsmitteln vor dem Schritt B1 oder B2.

13. Verfahren nach Anspruch 8, das ferner Folgendes umfasst:
Reservieren eines L2C-Konfigurationskontextes, wenn keine Antwortnachricht von der Netzvorrichtung auf der anderen Seite innerhalb einer spezifischen Zeitdauer, nachdem die L2C-Nachricht durch eine umgesetzte TCP-Verbindung an die Netzvorrichtung auf der anderen Seite gesendet worden ist, empfangen wird;
Zurücksenden einer Antwortnachricht an die Netzvorrichtung auf der anderen Seite, wenn eine L2C-Portkonfigurations-Anforderungsnachricht empfangen wird, und Löschen des reservierten L2C-Konfigurationskontextes.

14. Verfahren nach Anspruch 12, wobei die TCP-Verbindung, die L2C-Nachrichten führt, zwischen den Netzvorrichtungen ferner Folgendes umfasst:
eine TCP-Verbindung, die L2C-Nachrichten führt, zwischen einem Fernzugriffsknoten, Fern-AN/einem lokalen AN/einem Zusammenschlussknoten und einem Breitband-Fernzugriffs-Server, BRAS;
eine TCP-Verbindung, die L2C-Nachrichten führt, zwischen einem Fern-AN/einem lokalen AN/einem Zusammenschlussknoten und einem Breitband-Netz-Gateway, BNG; oder
eine TCP-Verbindung, die L2C-Nachrichten führt, zwischen einem Fern-AN/einem lokalen AN/einem Zusammenschlussknoten und einem Fern-AN/einem lokalen AN/einem Zusammenschlussknoten eines Dienstanbieters, SP.

## Revendications

1. Dispositif de commande de couche 2, L2C, pour acheminer des messages L2C dans des réseaux d'accès comprenant :
une unité mandataire de protocole de contrôle de transport, TCP, adaptée pour segmenter des connexions TCP portant des messages L2C entre des dispositifs de réseau connectés au dispositif L2C soit en convertissant une connexion TCP reçue d'un côté en n connexions TCP après segmentation et en envoyant les n connexions TCP à un dispositif de réseau connecté au dispositif de l'autre côté ; soit en convertissant m connexions TCP reçues d'un côté en une connexion TCP unique et en envoyant la connexion TCP unique au dispositif de réseau connecté au dispositif de l'autre côté.

2. Dispositif selon la revendication 1, comprenant en outre :
une unité de conversion de granularité de commande, connectée à l'unité mandataire TCP, et adaptée pour exécuter une conversion sur les granularités de commande des messages L2C.

3. Dispositif selon la revendication 1, comprenant en outre :
une unité de commande d'admission de connexion, CAC, connectée à l'unité mandataire TCP, et adaptée pour exécuter une commande d'admission sur les requêtes des messages L2C pour des ressources de réseau en fonction d'un état des ressources de réseau.

4. Dispositif selon la revendication 1, dans lequel l'unité mandataire TCP comprend en outre un module de mémorisation, adapté pour réserver un contexte de configuration L2C quand aucun message de réponse à un message de réponse de configuration de port L2C envoyé par l'unité mandataire TCP n'est reçu dans une période de temps spécifiée ;
et adapté pour supprimer le contexte de configuration L2C réservé quand le message de réponse au message de réponse de configuration de port L2C envoyé par l'unité mandataire TCP est reçu.

5. Dispositif selon la revendication 3, dans lequel les messages L2C comprennent des messages de configuration de circuit ou des messages de commande de multidiffusion.

6. Dispositif selon la revendication 1 ou 4, dans lequel le dispositif L2C est un noeud d'accès, AN, un serveur d'accès distant à large bande, BRAS, ou une passerelle de réseau à large bande, BNG, ou le dispositif L2C est configuré comme composant sur l'AN, le BRAS ou la BNG.

7. Système de commande de couche 2, L2C, comprenant le dispositif selon l'une quelconque des revendications 1 à 6.

8. Procédé de commande de couche 2, L2C, pour acheminer des messages L2C dans des réseaux d'accès, comprenant :
Etape A1, la réception d'une connexion TCP envoyée depuis un dispositif de réseau d'un côté par le biais d'une connexion TCP portant des messages L2C ; et
Etape B1, la conversion de la connexion TCP en n connexions TCP, et l'envoi des connexions TCP converties à un dispositif de réseau de l'autre côté ; ou
Etape A2, la réception de m connexions TCP envoyées par un dispositif de réseau d'un côté par le biais d'une connexion TCP portant des messages L2C ; et
Etape B2, la conversion des connexions TCP en une connexion TCP unique, et l'envoi de la connexion TCP convertie à un dispositif de réseau de l'autre côté.

9. Procédé selon la revendication 8, comprenant en outre :
après la réception d'un message L2C envoyé par le dispositif de réseau d'un côté par le biais de la connexion TCP portant les messages L2C, le renvoi d'un Acquittement, ACK, TCP, au dispositif de réseau par le biais de la connexion TCP.

10. Procédé selon la revendication 8 ou 9, comprenant en outre :
après la réception d'un message de réponse TCP envoyé par le dispositif de réseau de l'autre côté, l'acheminement du message de réponse TCP à un dispositif de réseau homologue par le biais de la connexion TCP mentionnée à l'Etape A1 ou A2.

11. Procédé selon la revendication 8, comprenant en outre : la conversion d'une granularité de commande du message L2C avant l'Etape B1 ou B2.

12. Procédé selon la revendication 8, comprenant en outre : l'exécution d'une commande d'admission sur une requête de connexion TCP du message L2C en fonction d'un état de ressources de réseau avant l'Etape B1 ou B2.

13. Procédé selon la revendication 8, comprenant en outre :
la réservation d'un contexte de configuration L2C quand aucun message de réponse du dispositif de réseau de l'autre côté n'est reçu dans une période de temps spécifiée après que le message L2C est envoyé au dispositif de réseau de l'autre côté par le biais d'une connexion TCP convertie ;
le renvoi d'un message de réponse au dispositif de réseau de l'autre côté à la réception d'un message de requête de configuration de port L2C, et la suppression du contexte de configuration L2C réservé.

14. Procédé selon la revendication 12, dans lequel la connexion TCP portant les messages L2C entre les dispositifs de réseau comprend en outre :
une connexion TCP portant des messages L2C entre un noeud d'accès AN distant /AN local / noeud d'agrégation et un serveur d'accès distant à large bande, BRAS ;
une connexion TCP portant des messages L2C entre un AN distant / AN local / noeud d'agrégation et une passerelle de réseau à large bande, BNG ; ou
une connexion TCP portant des messages L2C entre un AN distant / AN local / noeud d'agrégation et un AN distant / AN local / noeud d'agrégation d'un fournisseur de service, SP.
